(19)

**Europäisches Patentamt**
**European Patent Office**
**Office européen des brevets**

(11) **EP 1 750 113 A1**

(12) **EUROPEAN PATENT APPLICATION**

(43) Date of publication:
**07.02.2007 Bulletin 2007/06**

(51) Int Cl.:
**G01N 1/22** *(2006.01)* **B01D 53/04** *(2006.01)*

(21) Application number: **05017100.8**

(22) Date of filing: **05.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **GSF- Forschungszentrum für Umwelt und Gesundheit GmbH**
**80807 Munich (DE)**

(72) Inventors:
• **Keck, Lothar**
 **85778 Haimhausen (DE)**
• **Wittmaack, Klaus**
 **80638 München (DE)**

(74) Representative: **Reinhard - Skuhra - Weise & Partner**
**Friedrichstrasse 31**
**80801 München (DE)**

(54) **A denuder for the collection and removal of inorganic trace gases**

(57)     A denuder for the collection and removal of inorganic trace gases, which can be produced at low cost and in a small size and which can be handled easily comprises an inert housing (11) having a gas inlet (20), a gas outlet (21) and a receiving space (15) between the gas inlet (20) and the gas outlet (21), said receiving space containing a number of collecting plates with surfaces, respectively, which are arranged parallel to the gas flow direction between the gas inlet (20) and the gas outlet (21). The invention provides further a method of producing such a denuder, including the steps of providing a number of coated collection plates (22) with surfaces which are produced by pre-roughening thereof, applying them with a coating solution of collecting gas and then drying them and the step of fixing a number of collecting plates (22) coated with the coating solution within the receiving place (15) parallel to a gas flow direction from the gas inlet (20) to the gas outlet (21).

Fig. 2

EP 1 750 113 A1

## Description

The invention refers to a denuder for the collection and removal of inorganic trace gases and a method of producing such a denuder.

## Background of the invention

Denuders are well established devices for the collection and removal of inorganic trace gases in ambient air. They serve two purposes: (i) To determine the concentrations of trace gases like nitric acid, sulphur dioxide and ammonia. (ii) To eliminate trace gases from a volume of air to prevent the retention of the trace gases on downstream aerosol filters or on collected particulate matter.

The basic concept of a denuder is quite simple. Air is passed through a device with a large internal surface area. The surface is coated with a material that acts as an absorber for the trace gas to be collected. The gas molecules get in contact with the absorber by diffusion normal to the direction of the air flow. Theoretically the efficiency of trace gas removal is determined by the geometry and the dimensions of the denuder. In practice the efficiency is also limited by the reactivity and loading capacity of the absorber.

Tubular denuders were disclosed some time ago in Durham, J.L., Wilson, W.E., Baker Bailey, E., 1978, "Application of an SO2-denuder for continuous measurement of sulfur in submicrometric aerosols", Atmospheric Environment 12, 883-886. However, the use of these devices for the removal of gases in denuder-filter systems was limited since they allow only very low flow rates (~ 1 l/min), unless the length of the tube is extended to several meters. Significantly improved denuders were disclosed in Possanzini, M., Febo, A., Liberti, A., 1983, "New design of a high performance denuder for the sampling of atmospheric pollutants", Atmospheric Environment 17, 2605-2610. This document describes an annular denuder, which has a length of ~20 cm and which permits a reasonable flow rate (~ 10 l/min).

The state of the art with respect to denuders is disclosed in Koutrakis, P., Ferguson, S. T., Concord, W. Wolfson, J. M., 1994, "Denuder for gas sampling", US Patent 5302191. This honeycomb denuder (HD) features 212 parallel tubes, a diameter of 5.1 cm and a length of 3.8 cm. The HD is deployed in a commercial denuder-filter system (ChembComb sampling cartridge, Rupprecht & Patashnick Co., Inc.). Although the HD has clearly eased the sampling with denuder-filter systems, the device is not frequently used because the sampling equipment is quite big, because the associated laboratory work is rather intense and because the costs are quite high.

To overcome these disadvantages and to simplify the procedure rigorously, a fabric denuder was suggested by Fitz, D.R., Motallebi, N., 2000, "A fabric denuder for sampling semi-volatile species", Journal of the Air & Waste Management Association 50, 981-992. This denuder is very compact, cheap and easy to handle. A particularly attractive feature of the fabric denuder is that it allows a "filter-like treatment", i.e. the denuder can be coated, loaded in a filter holder and, be extracted almost like a coated filter. Unfortunately, the fabric denuders are not well characterized, they have efficiencies of typically only 90%, and they suffer from significant particle losses. Therefore they are not commonly used.

To summarize, currently available denuders and denuder-filters systems are useful but expensive, large and complicated to handle. Therefore, there is a demand for a new denuder which is less expensive, smaller and easy to handle.

## Summary of the invention

According to the invention there is provided a denuder for the collection and removal of inorganic trace gases according to claim 1. Further advantageous embodiments of this denuder are characterized in dependent claims 2-13.

Further, the invention provides a method of producing a denuder for the collection and removal of inorganic trace gases according to claim 14. Further advantageous embodiments of this method are characterized in dependent claims 15 to 18.

This invention describes a denuder having a geometry which differs favourably from previous concepts in terms of compactness and ease of use. Essentially, the denuder has a multi-channel parallel plate geometry. This kind of geometry has already been used for the collection of organic gases as disclosed in Eatough, D.J., Wadsworth, A., Eatough, D.A., Crawford, J.W., Hansen, L.D., Lewis, E.A., 1993, "A multi-system, multi-channel diffusion denuder sampler for the determination of fine-particulate organic material in the atmosphere", Atmospheric Environment 27, 1213-1219. However, this embodiment does not use the specific advantages of the geometry for the construction of a compact denuder and it is not suitable for the collection of inorganic gases. The parallel-plate geometry was also employed in continuously wetted denuders as disclosed in Dasgupta, P. K., Ni, L. Poruthoor, S. K., Hindes, D. C., 1997, "A multiple parallel plate wetted screen diffusion denuder for high-flow air sampling applications", Analytical Chemistry 69, 5018-5023. These devices do not aim at compactness and cost efficiency as the design presented here.

The new denuder for the collection and removal of gases comprises an inert housing having a gas inlet, a gas outlet and a receiving space between the gas inlet and the gas outlet. The receiving space of the housing contains a number of collecting plates with inert or non-inert surfaces. The plates are arranged parallel to the gas flow direction between the gas inlet and the gas outlet.

The main advantages of the new denuder are the very compact design and the ease of use. The denuder can be coated, loaded in a filter stack and, if desired, be extracted after sampling in much the same way as a coated filter or a fabric denuder. Thus the laboratory work is simplified and the existing sampling equipment can be used in combination with the new denuder. A further advantage of the new denuder is that in case of damage the collecting plates can be replaced easily.

According to a preferred embodiment of the denuder, the distances between two adjacent collecting plates are constant, preferably 0.58 mm. The denuded length is short, preferably only 8 mm. Due to this design, the denuder according to the invention is termed "mini parallel-plate denuder" (MPPD).

According to a further preferred embodiment of the invention, the collecting plates feature pre-roughened surfaces to assist the deposition of a coating. The collecting plates may have porous surfaces to advantageously increase the coating load on the denuder and thus increase the loading capacity. Further, the collecting plates may comprise non-inert plates, e.g. blank aluminium to collect acid gases. The collecting plates are supported at walls defining the receiving space, in particular by means of parallel flutes provided in two opposing walls of the receiving space. Further, additional fixing means may be used to hold said collecting plates in that flutes.

According to a preferred further embodiment the receiving space and the housing comprises a preferably rectangular cross section and said collecting plates have preferably a rectangular shape and a dimension to fit in said pearl flutes. However, the cross section may have any appropriate geometrical shape in order to make best use of the space in the housing or a filter holder.

The collecting plates are preferably glass cover slips, which is advantageous in terms of cost and handling. The housing of the denuder can be prepared from a material having an inert surface. Preferably it is made of PTFE or PFA or advantageously for stability reasons partly from glass or Teflon® coated metal.

According to a further preferred embodiment of the invention, the outer shape of the housing is dimensioned for insertion into a common filter holder. This allows also a simple handling of denuder-filter systems in form of a filter stack which comprises an arrangement of several denuders.

According to the invention, the method of producing a denuder for gas sampling provides an inert housing having a gas inlet, a gas outlet and a receiving space between the gas inlet and the gas outlet. Further, a number of coated collecting plates produced by pre-roughening the inert surfaces of the plates, applying them with a coating solution for collecting gas and drying them. Finally, a number of collecting plates coated with a coating solution is fixed within the receiving space parallel to a gas flow direction from the gas inlet to the gas outlet.

Preferably, the method uses glass cover slips for the plates, which are easy to obtain and to handle.

For producing the denuder, preferably two opposite walls of the receiving space are provided with parallel flutes for receiving and fixing said collecting plates, and the housing is prepared from PTFE. According to a further advantageous embodiment the denuder housing is produced in a outer shape to fit within a filter stack.

Further features and advantageous aspects of the invention will be evident from the following description of a preferred embodiment with reference to the appending figures.

**Description of figures:**

Fig. 1:     shows a top view of an embodiment of a denuder according to the present invention;

Fig. 2:     shows a section of figure 1 along the section line II-II therein;

Fig. 3:     shows a photo of the denuder according to figure I and 2 (top view);

Fig. 4:     shows setups to investigate the performance of the denuder according to the invention; and

Fig. 5:     is a graph showing efficiencies of the denuder according to the invention; to guide the eye, the datasets for HCl and $NH_3$-1%PA were fitted by Boltzmann functions.

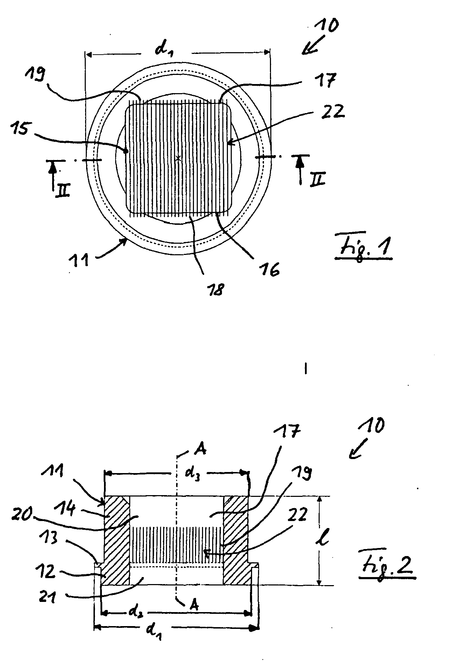

Figures 1-3 show a preferred embodiment of a denuder 10 for gas sampling. The denuder 10 comprises an inert housing 11, which is made of a Teflon® material. The housing 11 has a circular exterior and comprises a lower portion 12 with an external diameter $d_2$, a flange portion 13 which protrudes radially outward up to a diameter $d_1$ and an upper portion 14 having an outside diameter $d_3$, which is smaller than the diameter $d_2$. For the ease of machining, the portions 12, 13 and 14 are formed as six pieces and connected by screws.

In a preferred embodiment the maximum diameter $d_1$ is $\leq 37$ mm, therefore the housing can be filled in a modified commercial 37 mm filter holder (Millipore).

Inside the housing 11 is formed a receiving space 15 with a quadratic cross section, preferably 21 x 21 mm. As indicated in figure 1, the square receiving space 15 comprises two opposing walls 16 and 17, each wall having formed therein parallel flutes 18, 19, which are arranged parallel to the length axis A-A of the housing 11 in figure 2. The flutes 18, 19 are provided approximately in a middle region of the housing 11 between a gas inlet 20 in the lower portion 12 and a gas outlet 21 in the upper portion 14 and preferably extend not over the entire length of the plates 22 to avoid undesired collection of coating solution which may cause problems with the drying.

The distance between adjacent flutes 18, 19 is constant, in this embodiment approximately 0.58 mm. The collecting plates 22 are arranged between opposite flutes 18, 19 parallel to the gas flow direction between the gas inlet 20 and the gas outlet 21, i.e. parallel to the length axis A-A of the housing 11. Alternatively, said flutes 18, 19 may be substituted by single hold points or stopping places which hold the collecting plates 22 individually.

In this embodiment, the denuder 10 comprises 27 collecting plates 22, which are glass cover slips. Each slip has preferably a size of 22.5 x 8 mm and a thickness of preferably 0.175 $\pm$ 0.015 mm. In this embodiment the length f of the denuder 10 (see figure 2) is 20 mm. However, due to the concept of the invention, the length $\ell$ of the denuder can be reduced almost to the denuded length of 8 mm when the housing is made by injection moulding.

The collecting plates 22, which preferably comprise glass cover slips, are provided with a coating. In this embodiment the coating is provided on both surfaces of each collecting plate, and for a proper adhesion of the coating, the surfaces of the plates were pre-roughened, for example by sandblasting.

For coating the collection plates of the denuder according to the invention, an appropriate vessel, in which the denuder fitted properly, was used to insure that the active surface of the denuder 10 was completely wetted during the coating and extracting could be performed without sophisticated tilting of the denuder 10. Further, advantageously only a small amount of liquid, e.g. 8 ml, is necessary for the extraction. This results in a higher concentration of the extract. After wet coating the denuder 10 was vacuum dried.

The collecting plates 22 are held in said flutes 18, 19 parallel to the gas flow direction between the gas inlet 20 and the gas outlet 21 and can be easily exchanged, if necessary.

**Theoretical collection efficiency**

Provided that the coated surfaces act as a perfect sink for the gas, the theoretical efficiency $E_{\mathrm{MPPD}}$ of a parallel plate denuder can be calculated as disclosed in De Santis, F., 1994, "Comment on wet effluent denuder coupled liquid/ion chromatography systems: annular and parallel plate denuders", Analytical Chemistry, 66, 3503-3504:

$$(1) \qquad E_{MPPD} = 1 - 0.91 \cdot \exp\left( -7.54 \cdot \frac{d}{a} \cdot n_{MPPD} \cdot L \cdot \frac{D}{F} \right)$$

With "$d$" being the width of the denuder plates, "$a$" the distance between the plates, "$n_{MPPD}$" the number of spacings between the plates, "$L$" the length of the plates, "$D$" the diffusion coefficient of the gas, and "$F$" the total flow rate of air through the denuder. For comparison, the efficiency of a honeycomb denuder $E_{\mathrm{HD}}$ is determined from the Gormley-Kennedy equation for a tube denuder as disclosed in Gormley, P.G., Kennedy, M., 1949, "Diffusion of stream flowing through a cylindrical tube", Proceedings of the Royal Irish Academy 52A, 163-169:

$$(2) \qquad E_{HD} = 1 - 0.82 \cdot \exp\left( -11.41 \cdot n_{HD} \cdot L \cdot \frac{D}{F} \right)$$

Here "$n_{HD}$" refers to the number of tubes. Table 1 shows the dimensions of MPPD and HD along with the resultant efficiency for a flow rate of 10 l/min (= 167 cm$^3$/s).

Table 1: Dimensions of HD and MPPD and their theoretical collection efficiency $E$

|  | HD |  | MPPD |  |
| --- | --- | --- | --- | --- |
| Width $d$ [cm] | n.a. |  | 2.1 |  |
| Spacing $a$ [cm] | n.a. |  | 0.058 |  |
| Length $L$ [cm] | 3.8 |  | 0.8 |  |
| $n_{HD}$ or $n_{MPPD}$ | 212 |  | 28 |  |
| Outer dimension [cm] | 5.1 |  | 3.7 |  |
| Active surface area [cm$^2$] | 508 |  | 90 |  |
| Outer volume [cm$^3$] | ~60 |  | ~3.5 |  |
| Flow rate $F$ [cm$^3$/s] | 167 |  | 167 |  |
| Gas | HNO$_3$ | NH$_3$ | HNO$_3$ | NH$_3$ |
| $D$ [cm$^2$/s] *) | 0.121 | 0.236 | 0.121 | 0.236 |
| $E_{HD}$ or $E_{MPPD}$ | 0.999006 | 0.999998 | 0.989252 | 0.999841 |

*) the diffusion coefficients were taken from Koutrakis, P., Ferguson, S. T., Concord, W. Wolfson, J. M., 1994, "Denuder for gas sampling", US Patent 5302191.

The calculated efficiencies of the HD as well as of the MPPD are very close to unity. However, compared to the HD, the denuded length of the MPPD is shorter by a factor of 5 and the outer volume of the active part of the denuder is smaller by a factor of 17. These numbers document the big advantage of the MPPD in terms of compactness, an essential feature for the concept of the filter-like treatment. The small volume of the MPPD has the additional advantage that the denuder can be extracted with a small amount of water, resulting in a desirable high concentration of collected gas molecules in the extract.

A HD with the same compactness as the MPPD would have unfavourable features. According to eq. (1), a shorter denuded length of the HD could only be achieved by increasing the number of tubes. Combining eq. (1) and (2) one can calculate, for a fixed length L, the number $n_{HD}$ of honeycomb tubes required to produce an HD of the same efficiency as an MPPD:

$$(3) \qquad \widetilde{n}_{HD} = \frac{1}{11.41} \cdot \left( 7.54 \cdot \frac{d}{a} \cdot n_{MPPD} - \ln\left( \frac{0.91}{0.82} \right) \cdot \frac{F}{L \cdot D} \right) \approx 670$$

Even for the smaller of the two diffusion constants specified in Table 1, the second term in the parentheses of equation (3) amounts to only 2.4% of the first term. Hence one can simplify equation (3) to become

$$(3a) \qquad \widetilde{n}_{HD} = \left( \frac{7.54}{11.41} \right) \cdot \left( \frac{d}{a} \right) \cdot n_{MPPD} \approx 24 \cdot n_{MPPD} \approx 670$$

This means that to build an HD with the same collection efficiency as the MPPD, at the same length $L$, the HD must comprise 670 tubes. To minimize the loss of space in the active volume of the denuder the tubes must be compacted to form channels of hexagonal cross section. Inserted in the same cross sectional area as the MPPD (21 x 21 mm$^2$), the edge length of a hexagon would have to be 0.5 mm. According to the design concept of the HD, the starting material of such a hypothetical mini honeycomb denuder (MHD) would be round glass tubes with an outer diameter $d_{MHD}$ = 1 mm.

In order to minimize the particle losses due to impaction on the leading edge of the denuder walls, their cross sectional area must be as low as possible. The cross sectional areas of MDH and MPPD are

(4a)
$$A_{MHD} = \pi \cdot d_{MHD} \cdot w_{MHD} \cdot n_{MHD}$$

and

(4b)
$$A_{MPPD} = d_{MPPD} \cdot w_{MPPD} \cdot n_{MPPD}$$

where "$w_{MHD}$" denotes the thickness of the glass tubes and "$w_{MPPD}$" the thickness of the glass plates. Setting $A_{MHD} = A_{MPPD}$ we have

(5)
$$\omega_{MHD} = \frac{1}{\pi} \cdot \left( \frac{d_{MPPD}}{d_{MHD}} \right) \cdot \left( \frac{n_{MPPD}}{n_{MHD}} \right) \cdot w_{MPPD} \approx 0.05mm$$

Glass tubes with such a small wall thickness would be extremely difficult to handle. Furthermore, the tubes would have to tolerate high-temperature treatment during the compaction process and they would have to allow sandblasting of the inner surfaces.So far it has not been shown that the fabrication of such an embodiment is technically possible at all. In contrast, the fabrication of the MPPD is simple.

**Experimental tests of the MPPD**

The performance of the MPPD according to the invention was evaluated with respect to three criteria, (1) collection efficiency and loading capacity, (2) the amount of particle loss due to deposition on outer and inner surfaces of the denuder and (3) suitability for use in a denuder-filter system. With the exception of the loading capacity, these properties are intrinsically tied to the denuder design. To achieve a high loading capacity, the denuder must carry a large amount of absorbing material and the absorbed gas molecules need to diffuse from the surface of the coating into the bulk of the layer. This however, is a question of the structure of the surface and the properties of the coating but not of the denuder geometry.

**Performance test #1: Collection efficiency and loading capacity**

*Employed Coatings*

The solutions used for the coatings are well established. Details are listed in Table 2. In the following, MPPD-SC denotes an MPPD denuder coated with SC, MPPD-PA is an MPPD coated with PA. HD-SC and HD-PA denotes a honeycomb denuder coated with SC and PA, respectively. GF-SC and GF-PA are glass fiber filters (GF) coated with SC and PA, respectively. These filters were used for a quantitative collection of acidic and basic gases.

Table 2: Coating solutions. $H_2O$ denotes deionised water.

| Gas to be collected | Coating substance | Dissolved in | Abbreviation |
|---|---|---|---|
| HCl, $HNO_3$, HONO and $SO_2$ | 1 g $Na_2CO_3$ + 1 g glycerol | 50 ml $H_2O$ + 50 ml methanol | 1% SC |
| HCl, $HNO_3$, HONO and $SO_2$ | 5 g $Na_2CO_3$ + 5 g glycerol | 100 ml $H_2O$ | 5% SC |
| $NH_3$ | 1 g $H_3PO_4$ | 100 ml methanol | 1% PA |
| $NH_3$ | 5 g $H_3PO_4$ | 100 ml methanol | 5% PA |

*Laboratory experiments*

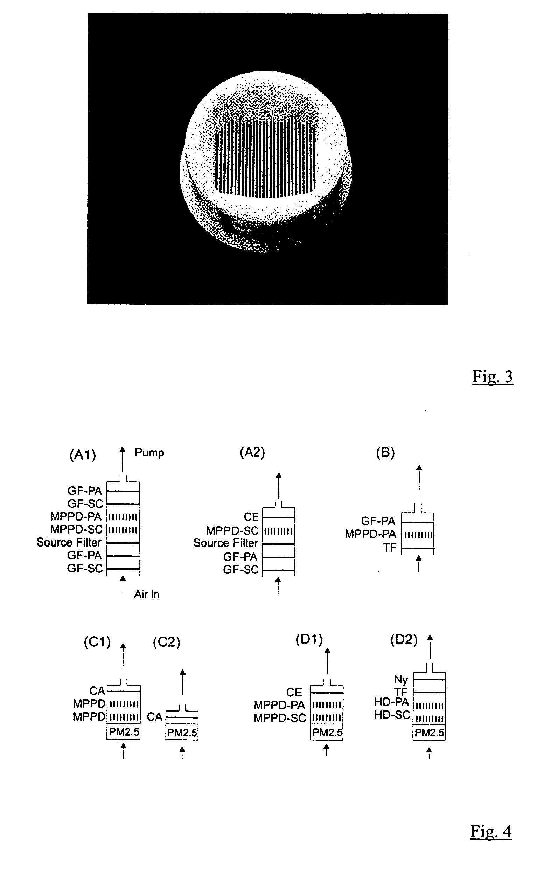

The efficiency and loading capacity of the denuders was determined for the gases HCl, $HNO_3$ and $NH_3$. The method is disclosed in Keck, L., Wittmaack, K., 2005, "Laboratory studies on the retention of nitric acid, hydrochloric acid and ammonia on aerosol filters", Atmospheric Environment 39, 2157-2162. It comprises four steps, namely producing clean air, loading the clean air with gases to be investigated, collecting the gas, and measuring the residual gas. The setup for HCl and $NH_3$ is shown in figure 4 (A1). A filter stack, operated at a flow rate of 10 l/min, contained seven elements in series. The first two prefilters, GF-SC and GF-PA, were used to remove ambient particles as well as HCl, $HNO_3$ and $NH_3$. The air then passed through a 'source filter', which is composed of dried $NH_4Cl$ deposited from an aqueous solution onto a quartz fiber (QF) filter. As the air is drawn through the source filter, the salt evaporates and generates an equimolar and constant concentrations of HCl and $NH_3$ for up to several days. To enhance the evaporation rate from the source filter and thus to shorten the time for the experiments, the filter stack was operated in an oven at a temperature of 40°C and a relative humidity around 10%. The evolving gases passed through an MPPD-SC, an MPPD-PA, a GF-SC and finally through a GF-PA. GF-SC and GF-PA retain HCl and $NH_3$ quantitatively. The adsorbed gases were extracted with 10 ml of deionised water. The extract was the analysed by ion chromatography with an accuracy of 5%. The amount of gas is then calculated from the concentrations of the respective ion. A negligible portion of HCl was found to be retained by GF-PA and MPPD-PA, and the same holds for the retention of $NH_3$ by GF-SC and MPPD-SC. The experimental efficiency, $E_{exp}$, of the MPPD is given by:

$$(6) \qquad E_{exp} = \frac{c_D}{c_D + c_B}.$$

with "$c_D$" and "$c_B$" being the concentrations found in the denuder and the backup filter, respectively. Two series of experiments were performed, the first using 1% SC and 1% PA and the second with 5% SC and 5% PA.

To investigate the efficiencies for $HNO_3$, the modified configuration (A2) was used. Here the QF filter was loaded with $NH_4NO_3$ and the evolving gases were $HNO_3$ and $NH_3$. Since the cellulose (CE) filter retains $HNO_3$ quantitatively, as disclosed in Keck, L., Wittmaack, K., 2005, "Laboratory studies on the retention of nitric acid, hydrochloric acid and ammonia on aerosol filters", Atmospheric Environment 39, 2157-2162, the efficiencies were calculated from the amounts of gas collected by the MPPD-SC and the (CE) backup filter using eq. (6).

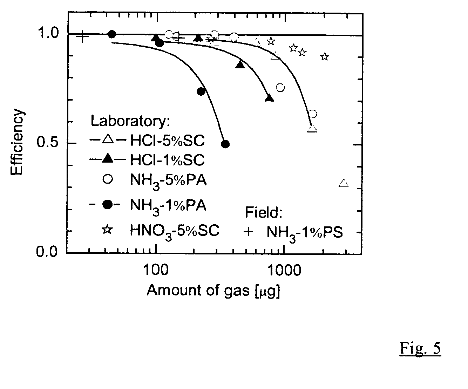

The measured efficiencies shown in figure 5 ranged between 0.97 and 1.0 at low loadings. For $NH_3$ the low-load efficiency is essentially unity. For $HNO_3$ and HCl, on the other hand, the maximum efficiency was 0.98. A reason for the lower efficiency could be the lower diffusion constant of the heavier molecules (see Table 1). Field tests were performed to determine the efficiency of the denuders for $NH_3$ at ambient sampling. The arrangement, shown in figure 4 (B)., consists of a Teflon (TF) filter to retain particulate matter, a MPPD coated with 1% or PA and a GF-PA filters. The sampling times in two tests were 1 and 3 days. The difference to the laboratory study was that these sampling were done at much lower temperatures (3-13°C) and high humidity (70-80%). The measured efficiencies, also shown in figure 5, were higher than 0.98 and are thus similar to the results of the laboratory studies. Hence there is no evidence that the collection efficiency depends significantly on the operating conditions.

The loading capacity of a denuder may be defined as the maximum amount of gas collected with an efficiency better than 0.95. The results are compiled in Table 3. For comparison, we note that in central Europe the concentration of ambient $NH_3$ is typically 5 $\mu g/m^3$. A loading capacity of 0.4 mg thus enables quantitative collection of the gas up to a total throughput of air of 80 $m^3$. At a flow rate of 10 l/min (= 0.6 $m^3/h$), this corresponds to a maximum sampling time of 5.6 days, much longer than the standard sampling period of one day.

Table 3: Loading capacity of the MPPD for different coatings

| Gas | Coating | Loading capacity [mg] |
|---|---|---|
| HCl | 1% SC | 0.2 |
| HCl | 5% SC | 0.6 |
| $NH_3$ | I%PA | 0.1 |
| $NH_3$ | 5% PA | 0.4 |
| $HNO_3$ | 5% SC | 0.8 |

Table 3 indicates that the loading capacity increases roughly proportional with the concentration of the applied coating solution. This finding documents that the loading capacity of a denuder is essentially controlled by the amount of coating per active surface area.

**Performance test #2: Assessment of Particle loss**

It is essential that denuders, particularly when used in combination with particle samplers, retain only a low fraction of particulate matter. The particle loss in the MPPD was assessed by the simple arrangements shown in figure 4 (C1 and C2). C1 contained two uncoated MPPD in series and a membrane filter, either mixed cellulose ester (CA) or TF. C2 was an identical bare filter reference sampler. Both samplers were operated with a PM 2.5 inlet, i.e. with an arrangement that allows only particles with an aerodynamic diameter < 2.5 $\mu$m to pass through. The flow rate was 10 l/min and three daily samples were collected. Denuder-filter systems are commonly used to collect volatile fine aerosols. Therefore the test focused on $SO_4^{2-}$ and $NH_4^+$ which are mainly contained in particles with diameters of less than 1 $\mu$m. Table 4 shows the concentration ratio inferred from the two filters stacks.

Table 4: Ratio of PM 2.5 concentrations measured on a filter behind two MPPD ($c_1$) and on bare reference filter ($c_2$).

| Species | $c_1/c_2$ [%] |
| --- | --- |
| $SO_4^{2-}$ | 96 $\pm$ 4 |
| $NH_4^+$ | 95 $\pm$ 3 |

For these fine particles the average concentration ratio is 96 $\pm$ 4 %, corresponding to a particle loss of 4 $\pm$ 4 % for two denuders in series or to 2 $\pm$ 2 % for a single MPPD. Thus the particle loss is at the limit of detectability. The particle loss can be expected to decrease when the surface of the denuders is coated, as disclosed in Koutrakis, P., Ferguson, S. T., Concord, W. Wolfson, J. M., 1994, "Denuder for gas sampling", US Patent 5302191.

**Performance test #3: Application in a denuder-filter system**

The MPPD was employed in a denuder-filter system to demonstrate that (i) ambient gas concentrations can be measured and (ii) the MPPD prevents the retention of ambient gases on downstream aerosol filters. According to the overall concept of the invention, the MPPD could be loaded in a modified common filter stack. The filter stack, shown in figure 4 (D1), contained a MPPD-SC and MPPD-PA, coated with 5% SC and PA, respectively and a (CE) filter which retains gaseous nitric acid quantitatively. The filter stack was operated in a PM 2.5 sampler and the arrangement is denoted "MPPD system". This MPPD system was operated in parallel with the well established ChembComb sampling cartridge as a reference sampler, here denoted "HD system" and shown in figure 4 (D2). The HD system was equipped with two HD coated with 1% SC and 1% PA, a TF filter, and nylon filter (Ny) to collect $HNO_3$ evaporating from the TF filter. Both samplers were operated at a standard flow rate of 10 l/min, and six daily samples were collected.

For the comparison of gases, we focus on $SO_2$. Table 5 shows that the $SO_2$ concentrations measured by MPPD and HD agree reasonably well, indicating that the MPPD enables a proper quantification of ambient gas concentrations.

Table 5: Ratio of concentrations measured by MPPD system and HD system

| Species | $c_{MPPD}/c_{HD}$ |
| --- | --- |
| $SO_2$(gas) | 1.08 $\pm$ 0.16 |
| $SO_4^{2-}$ (particulate) | 0.95 $\pm$ 0.06 |
| $NO_3^{2-}$ (particulate) | 0.96 $\pm$ 0.06 |

To compare the concentrations of particulate matter, the concentrations of the HD system were calculated from the sum of the concentrations on the TF filter and the Ny filter. For the MPPD system the concentrations were inferred from the CE filter. Table 5 shows that the concentrations of particulate sulfate and nitrate measured by the two samplers agree quite well. The close agreement indicates that the MPPD does not cause a significantly larger particle loss than the HD. During these field studies the concentrations of gaseous $NO_3^{2-}$ (mainly $HNO_3$) varied strongly, ranging from 10 to 140% of the concentrations of the particulate $NO_3^{2-}$. If a significant amount of $HNO_3$ along with $NH_3$ had passed through the MPPD, this gas would have been absorbed on the CE filter to become detected as "artificial" particulate nitrate (positive sampling artefact). The lack of a difference between the particulate nitrate concentrations measured with the MPPD and the HD system provides further evidence for the high collection efficiency of the MPPD.

**Claims**

1. A denuder (10) for the collection and removal of inorganic trace gases, comprising:

an inert housing (11) having a gas inlet (20), a gas outlet (21) and a receiving space (15) between the gas inlet (20) and the gas outlet (21),
said receiving space (15) containing a number of collecting plates (22) with surfaces, respectively, which are arranged parallel to the gas flow direction between the gas inlet (20) and the gas outlet (21).

2. The denuder (10) according to claim 1, wherein the distances between two adjacent collecting plates (22) are constant, respectively.

3. The denuder (10) according to claim 1 or 2, wherein the collecting plates (22) comprise inert or non-inert plates or plates with a coating on at least one side thereof.

4. The denuder (10) according to claim 3, wherein the coating of the collecting plates (22) is provided on pre-roughened or/and on porous surfaces of the collecting plates (22).

5. The denuder (10) according to a preceding claim, wherein said collecting plates (22) are supported at walls (16, 17) defining the receiving space (15).

6. The denuder (10) of claim 5, wherein the supporting walls (16, 17) have formed therein parallel flues (18, 19).

7. The denuder (10) of claim 6, wherein the parallel flutes (18, 19) are provided in two opposing walls (16, 17) of the receiving space (15) for holding that collecting plates (22), the length of said flutes (18, 19) being less or equal the length of the collecting plates (22), respectively.

8. The denuder (10) according to claim 6 or 7, wherein said collecting plates (22) are held in said flutes (18, 19) by additional fixing means.

9. The denuder (10) according to a preceding claim, wherein the receiving space (15) in the housing (11) comprises a constant cross section.

10. The denuder (10) according to a preceding claim, wherein said collecting plates (22) have a shape which is adapted to the cross section of the housing.

11. The denuder (10) according to a preceding claim, wherein said collecting plates (22) are glass cover slips.

12. The denuder (10) according to a preceding claim, wherein the housing (11) is made of PFA, PTFE, Teflon@ coated metal or partly from glass.

13. The denuder (10) according to preceding claim, wherein the outer shape of the housing (11) is dimensioned for insertion into a filter holder, preferably in a stacked arrangement.

14. A method of producing a denuder (10) for the collection and removal of inorganic trace gases, comprising the following steps:

- providing an inert housing (11) having a gas inlet (20), a gas outlet (21) and a receiving space (15) between the gas inlet (20) and the gas outlet (21);
- providing a number of coated collecting plates (22) with surfaces which are produced by pre-roughening thereof, applying them with a coating solution for collecting gas and then drying them; and
- fixing a number of collecting plates (22) coated with said coating solution within the receiving space (15) parallel to a gas flow direction from the gas inlet (20) to the gas outlet (21).

15. The method of claim 14, wherein glass cover slips are used for the plates (22).

16. The method of claim 14 or 15, wherein opposite walls (16, 17) of the receiving space (15) are provided with parallel flutes (18, 19) for receiving and fixing said collecting plates (22).

17. The method of one of claims 14 to 16, wherein the housing (11) is produced of PTFE, PFA, Teflon® coated metal or partly from glass.

**18.** The method of one of claims 14 to 17, wherein the housing (11) is produced with an outer shape to fit within a filter holder.

$d_1$

19

17

22

15

II   II

11

18   16

_Fig. 1_

10

I

A   17   10

11   $d_3$   19

20   14   22

13   $l$

12

21   A

$d_2$

$d_1$

_Fig. 2_

Fig. 3

Fig. 4

Fig. 5

**European Patent Office**

**EUROPEAN SEARCH REPORT**

Application Number

EP 05 01 7100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 40 39 951 A1 (BLUECHER, HASSO VON, 4006 ERKRATH, DE; RUITER, ERNEST DE, DR., 5090 LE) 17 June 1992 (1992-06-17) * figure 1 * | 1-5,9, 10,14 | G01N1/22 B01D53/04 |
| X | US 5 972 081 A (SELBY ET AL) 26 October 1999 (1999-10-26) * figure 2 * | 1-5,9, 10,14 | |
| D,A | US 5 302 191 A (KOUTRAKIS ET AL) 12 April 1994 (1994-04-12) * the whole document * | 1-18 | |
| A | EP 1 413 348 A (AIR PRODUCTS AND CHEMICALS, INC) 28 April 2004 (2004-04-28) * the whole document * | 1-18 | |

TECHNICAL FIELDS SEARCHED (IPC)

B01D
G01N

The present search report has been drawn up for all claims

| Place of search | Date of completion of the search | Examiner |
|---|---|---|
| The Hague | 20 January 2006 | Faria, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 7100

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2006

| Patent document cited in search report | | Publication date | Patent family member(s) | | Publication date |
|---|---|---|---|---|---|
| DE 4039951 | A1 | 17-06-1992 | NONE | | |
| US 5972081 | A | 26-10-1999 | NONE | | |
| US 5302191 | A | 12-04-1994 | NONE | | |
| EP 1413348 | A | 28-04-2004 | CA | 2437054 A1 | 13-02-2004 |
| | | | US | 2004118287 A1 | 24-06-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5302191 A

**Non-patent literature cited in the description**

- **DURHAM, J.L. ; WILSON, W.E. ; BAKER BAILEY, E.** Application of an SO2-denuder for continuous measurement of sulfur in submicrometric aerosols. *Atmospheric Environment,* 1978, vol. 12, 883-886
- **POSSANZINI, M. ; FEBO, A. ; LIBERTI, A.** New design of a high performance denuder for the sampling of atmospheric pollutants. *Atmospheric Environment,* 1983, vol. 17, 2605-2610
- **FITZ, D.R. ; MOTALLEBI, N.** A fabric denuder for sampling semi-volatile species. *Journal of the Air & Waste Management Association,* 2000, vol. 50, 981-992
- **EATOUGH, D.J. ; WADSWORTH, A. ; EATOUGH, D.A. ; CRAWFORD, J.W. ; HANSEN, L.D. ; LEWIS, E.A.** A multi-system, multi-channel diffusion denuder sampler for the determination of fine-particulate organic material in the atmosphere. *Atmospheric Environment,* 1993, vol. 27, 1213-1219
- **DASGUPTA, P. K. ; NI, L. ; PORUTHOOR, S. K. ; HINDES, D. C.** A multiple parallel plate wetted screen diffusion denuder for high-flow air sampling applications. *Analytical Chemistry,* 1997, vol. 69, 5018-5023
- **DE SANTIS, F.** Comment on wet effluent denuder coupled liquid/ion chromatography systems: annular and parallel plate denuders. *Analytical Chemistry,* 1994, vol. 66, 3503-3504
- **GORMLEY, P.G. ; KENNEDY, M.** Diffusion of stream flowing through a cylindrical tube. *Proceedings of the Royal Irish Academy,* 1949, vol. 52A, 163-169
- **KECK, L. ; WITTMAACK, K.** Laboratory studies on the retention of nitric acid, hydrochloric acid and ammonia on aerosol filters. *Atmospheric Environment,* 2005, vol. 39, 2157-2162